# EUROPEAN PATENT APPLICATION

(11) **EP 2 373 016 A2**
(43) Date of publication of application: **05.10.2011**
(21) Application number: 11002350.4
(22) Date of filing: 22.03.2011
(51) Int. Cl.: H04N 7/15, G06F 17/28

(54) **Method and system for adding translation in a videoconference**

(30) Priority: 30.03.2010 US 749832
(71) Applicant: POLYCOM, INC., Pleasanton, California 94588 (US)
(72) Inventor: Liberman, Dovev, Petach Tikva (IL); Kaplan, Amir, Emek-Hefer 42842 (IL)
(74) Representative: Käck, Jürgen

(57) **Abstract**

A multilingual multipoint videoconferencing system provides real-time translation of speech by conferees. Audio streams containing speech may be converted into text and inserted as subtitles into video streams. Speech may also be translated from one language to another, with the translated speech inserted into video streams as and choose the subtitles or replacing the original audio stream with speech in the other language generated by a text to speech engine. Different conferees may receive different translations of the same speech based on information provided by the conferees on desired languages.

## Description

### TECHNICAL FIELD

The present invention relates to videoconferencing communication and more particularly to the field of multilingual multipoint videoconferencing.

### BACKGROUND ART

Videoconferencing may remove many boundaries. One physical boundary that the videoconference may remove is the physical distances from one site (endpoint/terminal) to another. Videoconferencing may create an experience as if conferees from different places in the world were in one room. Videoconferencing enables people all over the world to easily communicate with one another without the need to travel from one place to another, which is expensive, time consuming, and pollutes the air (due to the need to use cars and/or airplanes). Videoconferencing may remove time factors as well as distance boundaries. As the variety of videoconferencing equipment that may be used over different networks grows, more and more people use videoconferencing as their communication tool.

In many cases, a videoconference may be a multilingual conference, in which people from different locations on the globe need to speak to one another in multiple languages. In multipoint videoconferencing where endpoints are placed in different countries, speaking in different languages, some conferees in the session may need to speak in a language other than their native language in order to be able to communicate and understand the conferees at the other sites (endpoints). Sometimes even people who speak the same language but have different accents may have problems in understanding other conferees. This situation may cause inconveniences and/or mistakes in understanding.

In some other sessions, one or more conferees may have hearing problem (deaf or hearing-impaired people, for example). Deaf or hearing-impaired people may only participate effectively in a videoconference if they may read the lips of the speaker, which may become difficult if the person speaking is not presented on the display, or if the zoom is not effective, etc.

One technique used for conferees who are hearing impaired or speak a foreign language is to rely on a human interpreter to communicate the content of the meeting. Typically, the interpreter stands near a front portion of the conference room with the conferee in order for the hearing impaired to view the interpreter.

Another technique used is using a closed-caption engine at one or more endpoints. One or more closed-caption entry devices may be associated to one or more endpoints. A closed-caption entry device may be a computer-aided transcription device, such as a computer-aided real-time translator, a personal digital assistant (PDA), a generic personal computer, etc. In order to launch a closed-caption feature, an IP address of a captioner's endpoint is entered in a field of a web browser of a closed-caption entry device. A web page associated with the endpoint will appear and the user may access an associated closed-caption page. Once the captioner selects the closed-caption page, the captioner may begin entering text into a current field. The text is then displayed to one or more endpoints participating in the videoconference. For example, the text may be displayed to a first endpoint, a computing device, a personal digital assistant (PDA), etc.

The captioner may choose to whom to display the closed caption text. The captioner may decide to display the text at all locations participating in the conference except, for example, for locations two and three. As another example, the user may choose to display closed-captioning text at location five only. In other words, closed-caption text may be multicast to as many conferees the captioner chooses.

As previously discussed, a captioner may access a web page by entering the IP address of the particular endpoint, for example. A closed-caption text entry page is displayed for receiving closed-caption text. The captioner enters text into a current text entry box via the closed-caption entry device. When the captioner hits an "Enter" or a similar button on the screen or on the closed-caption entry device, the text that is entered in the current text entry box is displayed to one or more endpoints associated with the videoconference.

In multilingual videoconferencing, a human interpreter for hearing-impaired people may face problems. One problem, for example, may occur in a situation in which more than one person is speaking. The human interpreter will have to decide which speaker to interpret to the hearing-impaired audience and how to indicate the speaker that is currently being interpreted.

Relying on a human translator may also degrade the videoconference experience, because the audio of the translator may be heard simultaneously with the person being translated in the conference audio mix. In cases where more than one human translator is needed to translate simultaneously, the nuisance may be intolerable. Furthermore, in long sessions, the human translator's attention is decreased and the translator may start making mistakes, and pauses during the session.

Furthermore, where launching a closed-caption feature by a captioner is used, in which the captioner enters translation as a displayed text, the captioner must be able to identify who should see the closed-caption text. The captioner must also enter the text to be displayed to one or more endpoints associated with the videoconference. Thus, the captioner must be alert at all times, and try not to make human mistakes.

A multipoint control unit (MCU) may be used to manage a video communication session (i.e., a videoconference). An MCU is a conference controlling entity that may be located in a node of a network, in a terminal, or elsewhere. The MCU may receive and process several media channels, from access ports, according to certain criteria and distribute them to the connected channels via other ports. Examples of MCUs include the MGC-100, RMX 2000^{®}, available from Polycom Inc. (RMX 2000 is a registered trademark of Polycom, Inc.). Common MCUs are disclosed in several patents and patent applications, for example, U.S. Patent Nos. 6,300,973, 6,496,216, 5,600,646, 5,838,664, and/or 7,542,068, the contents of which are incorporated herein in their entirety by reference. Some MCUs are composed of two logical modules: a media controller (MC) and a media processor (MP).

A terminal (which may be referred to as an endpoint) may be an entity on the network, capable of providing real-time, two-way audio and/or audiovisual communication with other terminals or with the MCU. A more thorough definition of an endpoint (terminal) and an MCU may be found in the International Telecommunication Union ("ITU") standards, such as but not limited to the H.320, H.324, and H.323 standards, which may be found in the ITU.

Continuous presence (CP) videoconferencing is a videoconference in which a conferee at a terminal may simultaneously observe several other conferees' sites in the conference. Each site may be displayed in a different segment of a layout, where each segment may be the same size or a different size one or more displays. The choice of the sites displayed and associated with the segments of the layout may vary among different conferees that participate in the same session. In a continuous presence (CP) layout, a received video image from a site may be scaled down and/or cropped in order to fit a segment size.

### SUMMARY OF INVENTION

Embodiments that are depicted below solve some deficiencies in multilingual videoconferencing that are disclosed above. However, the above-described deficiencies in videoconferencing do not limit the scope of the inventive concepts in any manner. The deficiencies are presented for illustration only.

The invention is defined in the independent claims 1 and 11, respectively. Particular embodiments of the invention are set out in the dependent claims.

In one embodiment, the novel system and method may be implemented in a multipoint control unit (MCU), transforming a common MCU with all its virtues into a Multilingual-Translated-Video-Conference MCU (MLTV-MCU).

In one embodiment of a Multilingual-Translated-Video-Conference (MLTV-MCU), the MLTV-MCU may be informed which audio streams from the one or more received audio streams in a multipoint videoconference need to be translated, and the languages into which the different audio streams need to be translated. The MLTV-MCU may translate each needed audio stream to one or more desired languages, with no need of human interference. The MLTV-MCU may display the one or more translations of the one or more audio streams, as subtitles for example, on one or more endpoint screens.

In one embodiment of an MLTV-MCU may utilize the fact that the MLTV-MCU receives separate audio streams from each endpoint. Thus, the MLTV-MCU may translate each received audio stream individually before mixing the streams together, thus assuring a high quality audio stream translation.

When a conferee joins a multipoint session, a MLTV-MCU may ask if a translation is needed. In one embodiment, the inquiry may be done in an Interactive Voice Response (IVR) session in which the conferee may be instructed to push certain keys in response to certain questions. In other embodiment, in which a "click and view" option is used, a menu may be displayed over the conferee's endpoint. The menu may offer different translation options. The options may be related to the languages and the relevant sites, such as the conferee's language; the languages into which to translate the conferee's speech; the endpoints whose audio is to be translated to the conferee's language; the languages into which the conferee desires translation; a written translation, using subtitles, or vocal translation; if a vocal translation, whether the translation should be voiced by a female or male, in which accent, etc. The conferee may response to the questions by using a cursor, for example. An example click and view method is disclosed in details in U.S. Patent No. 7,542,068, the content of which is incorporated herein in its entirety by reference.

An example MLTV-MCU may use a voice-calibration phase in which a conferee in a relevant site may be asked, using IVR or other techniques, to say few pre-defined words in addition to "state your name," which is a common procedure in continuous presence (CP) videoconferencing. During the voice-calibration phase, the MLTV-MCU may collect information related to the features (accents) of the voice needed to be translated. This may be done by asking the conferee to say a predefined number of words (such as "good morning," "yes," "no," "day," etc.). The calibration information may be kept in a database for future use.

In some embodiments the calibration phase may be used for identifying the language of the received audio stream. In such embodiments, a receiver endpoint may instruct the MLTV-MCU to translate any endpoint that speaks in a certain language, English for example, into Chinese, for example. Such an MLTV-MCU may compare the received audio string of the calibration words to a plurality of entries in a look-up table. The look-up table may comprise strings of the pre-defined words in different languages. When a match between the received audio strings and an entry in the look-up table is received, the MLTV-MCU may automatically determine the language of the received audio stream. An MLTV-MCU may have access to a database where it may store information for future use. Another embodiment of an MLTV-MCU may use commercial products that automatically identify the language of a received audio stream. Information on automatically language recognition may be found in the article by M. Sugiyama entitled "Automatic language recognition using acoustic features," published in the proceedings of the 1991 International Conference on Acoustics, Speech and Signal Processing. In some embodiments, a feedback mechanism may be implemented to inform the conferee of the automatic identification of the conferee's language, allowing the conferee to override the automatic decision. The indication and override information may be performed by using the "click and view" option.

The MLTV-MCU may be configured to translate and display, as subtitles, a plurality of received audio streams simultaneously. The plurality of received audio streams to be translated may be in one embodiment a pre-defined number of audio streams with audio energy higher than a certain threshold-value. The pre-defined number may be in the range 3 to 5, for example. In one embodiment, the audio streams to be translated may be audio streams from endpoints a user requested the MLTV-MCU to translate. Each audio stream translation may be displayed in a different line or distinguished by a different indicator.

In one embodiment, the indicators may comprise subtitles with different colors for each audio stream, with the name of the conferee/endpoint that has been translated at the beginning of the subtitle. Subtitles of audio streams that are currently selected to be mixed may be displayed with bold letters. The main speaker may be marked in underline and bold letters. Different letter size may be used for each audio-stream-translation subtitle according to its received/measured signal energy. In one embodiment, the main speaker may be the conferee whose audio energy level was above the audio energy of the other conferees for a certain percentage of a certain period. The video image of the main speaker may be displayed in the biggest window of a CP video image. In some embodiments, the window of the main speaker may be marked with a colored frame.

Once an MLTV-MCU has identified an audio stream it needs to translate, identifies the language of the audio stream, and identifies the language to which the audio stream should be translated, the MLTV-MCU may convert the audio stream into a written text. In the embodiment, the MLTV-MCU may have access to a speech to text engine (STTE) that may convert an audio stream into text. The STTE may use commercially available components, such as the Microsoft Speech SDK, available from Microsoft Corporation, IBM Embedded Via Voice, available from International Business Machines Corporation, and others.

One embodiment of an MLTV-MCU may utilize the fact that the MLTV- MCU receives separate audio streams from each endpoint. Thus, the MLTV-MCU may convert each required received audio streams to text individually, before mixing the streams together, to improve the quality audio stream transformation to text. In one embodiment of an MLTV-MCU, the audio streams may pass through one or more common MCU noise filters before transferred to the STTE, filtering the audio stream to improve the quality of the results from the STTE. A MCU audio module may distinguish between voice and non-voice. Therefore, the MCU in one the embodiment may remove the non-voice portion of an audio stream, and further ensure high quality results.

In one embodiment, the MLTV-MCU may further comprise a feedback mechanism, in which a conferee may receive a visual estimation-indication regarding the translation of the conferee's words. If an STTE may interpret a conferee's speech in two different ways, it may report a confidence indication, for example a 50% confidence indication. The STTE may report its confidence estimation to the MLTV-MCU, and the MLTV-MCU may display it as a grade on the conferee's screen. In another embodiment, the MLTV-MCU may display on a speaking conferee's display the text the STTE has converted (in the original language), thus enabling a type of speaker feedback for validating the STTE transformation. In some embodiments, when the STTE does not succeed in converting a certain voice segment, an indication may be sent to the speaker and/or to the receiver of the subtitle.

After an audio stream has been converted to text by STTE, one embodiment of the MLTV-MCU may translate the text by a translation engine (TE) to another language. Different Translation engines (TE) may be used by different embodiments. In some embodiments, the TE may be web sites, such as, the GOOGLE^{®} Translate (Google is a registered trademark of Google, Inc.) and YAHOO!^{®} Babel fish websites (YAHOO! is a registered trademark of Yahoo! Inc.). Other embodiments may use commercial translation engines such that provided by Babylon Ltd. The translation engines may be part of the MLTV-MCU, or in an alternate embodiment, the MLTV-MCU may have access to the translation engines, or both.

The MLTV-MCU may translate simultaneously one or more texts in different languages to one or more texts in different languages. The translations texts may be routed on the appropriate timing by the MLTV-MCU to be displayed as subtitles, on the appropriate endpoints, and in the appropriate format. MLTV-MCU may display on each endpoint screen subtitles of one or more other conferees simultaneously. The subtitles may be translated texts of different audio streams, where each audio stream may be of a different language, for example.

In some embodiments, the MCU may delay the audio streams in order to synchronize the audio and video streams (because video processing takes longer then audio processing). Therefore, one embodiment of an MLTV-MCU may exploit the delay for the speech to text converting and for the translation, thus enabling the synchronization of the subtitles with the video and audio.

In some embodiments, the MLTV-MCU may be configured to translate simultaneously different received audio streams, but display, as subtitles, only the audio streams with audio energy higher than a pre-defined value.

In yet another embodiment a conferee (participant/endpoint) may write a text, or send a written text, to the MLTV-MCU. The MLTV-MCU may convert the received written text to an audio stream at a pre-defined signal energy and mix the audio stream in the mixer. The written text, as one example, may be a translation of a received audio stream, and so on. In yet another embodiment, the MLTV-MCU may translate a text to another language, convert the translated text to an audio stream at a pre-defined signal energy, and mix the audio stream in the mixer. The MLTV-MCU may comprise a component that may convert a text to speech (text to speech engine), or it may have access to such a component or a web-service, or both options as mentioned above. In such an embodiment the audio of the conferees whose audio was not translated may be delayed before mixing, in order to synchronize the audio with the translated stream.

In one embodiment of an MLTV-MCU in which the translation is converted into speech, the speech volume may follow the audio energy indication of the received audio stream.

In one embodiment, the audio converted and translated to text may be saved as conference script. The conference script may be used as a summary of the conference, for example. The conference script may comprise the text of each audio that was converted to text, or text of the audio of the main speakers, etc. The conference script may be sent to the different endpoints. Each endpoint may receive the conference script in the language selected by the conferee. In the conference script there may be an indication which text was said by which conferee, which text was heard (mixed in the conference call), which text was not heard by all conferees, etc. Indication may include indicating the name of a person's whose audio was converted to the text at the beginning of the line; using a bold font for the main speaker's text; using a different letter size according to the audio signal energy measured; etc.

These and other aspects of the disclosure will be apparent in view of the attached figures and detailed description. The foregoing summary is not intended to summarize each potential embodiment or every aspect of the present invention, and other features and advantages of the present invention will become apparent upon reading the following detailed description of the embodiments with the accompanying drawings and appended claims.

Furthermore, although specific embodiments are described in detail to illustrate the inventive concepts to a person skilled in the art, such embodiments are susceptible to various modifications and alternative forms. Accordingly, the figures and written description are not intended to limit the scope of the inventive concepts in any manner.

### BRIEF DESCRIPTION OF DRAWINGS

The accompanying drawings, which are incorporated in and constitute a part of this specification, illustrate an implementation of apparatus and methods consistent with the present invention and, together with the detailed description, serve to explain advantages and principles consistent with the invention. In the drawings,

FIG. **1** is a block diagram illustrating a portion of a multimedia multipoint conferencing system, according to one embodiment;

FIG. **2** depicts a block diagram with relevant elements of a portion of an Multilingual-Translated-Video-Conference MCU (MLTV-MCU) according to one embodiment;

FIG. **3** depicts a block diagram with relevant elements of an portion of an audio module in an MLTV-MCU, according to one embodiment;

FIGs. **4A** and **4B** depicts layout displays of an MLTV-MCU with added subtitles according to one embodiment;

FIG. **5** is a flowchart illustrating relevant steps of an audio translation controlling process, according to one embodiment; and

FIG. **6** is a flowchart illustrating relevant steps of a menu-generator controlling process, according to one embodiment.

### DESCRIPTION OF EMBODIMENTS

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts are understood to reference all instance of subscripts corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

Although some of the following description is written in terms that relate to software or firmware, embodiments may implement the features and functionality described herein in software, firmware, or hardware as desired, including any combination of software, firmware, and hardware. References to daemons, drivers, engines, modules, or routines should not be considered as suggesting a limitation of the embodiment to any type of implementation.

Turning now to the figures in which like numerals represent like elements throughout the several views, example embodiments, aspects and features of the disclosed methods, systems, and apparatuses are described. For convenience, only some elements of the same group may be labeled with numerals. The purpose of the drawings is to describe example embodiments and not for limitation or for production use. Features shown in the figures are chosen for convenience and clarity of presentation only.

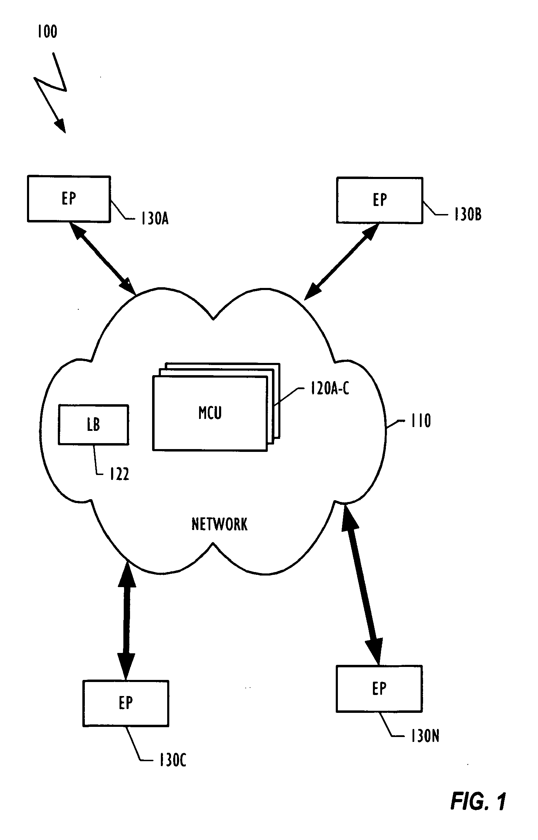

FIG. **1** illustrates a block diagram with relevant elements of an example portion of a multimedia multipoint conferencing system **100** according to one embodiment. System **100** may include a network **110,** one or more MCUs **120A-C,** and a plurality of endpoints **130A-N.** In some embodiments, network **110** may include a load balancer (LB) **122.** LB **122** may be capable of controlling the plurality of MCUs **120A-C.** This promotes efficient use of all of the MCUs **120A-C** because they are controlled and scheduled from a single point. Additionally, by combining the MCUs **120A-C** and controlling them from a single point, the probability of successfully scheduling an impromptu videoconference is greatly increased. In one embodiment, LB **122** may be a Polycom DMA^{®} 7000. (DMA is a registered trademark of Polycom, Inc.) More information on the LB **122** may be found in U.S. Patent No. 7,174,365, which is incorporated by reference in its entirety for all purposes.

An endpoint is a terminal on a network, capable of providing real-time, two-way audio/visual/data communication with other terminals or with a multipoint control module (MCU, discussed in more detail below). An endpoint may provide speech only, speech and video, or speech, data and video communications, etc. A videoconferencing endpoint typically comprises a display module on which video images from one or more remote sites may be displayed. Example endpoints include POLYCOM® VSX® and HDX® series, each available from Polycom, Inc. (POLYCOM, VSX, and HDX are registered trademarks of Polycom, Inc.). The plurality of endpoints (EP) **130A-N** may be connected via the network **110** to the one or more MCUs **120A-C.** In embodiments in which LB **122** exists, then each EP **130** may communicate with the LB **122** before being connected to one of the MCUs **120A-C.**

The MCU **120A-C** is a conference controlling entity. In one embodiment, the MCU **120A-C** may be located in a node of the network **110** or in a terminal that receives several channels from access ports and, according to certain criteria, processes audiovisual signals and distributes them to connected channels. Embodiments of an MCU **120A-C** may include the MGC-100 and RMX 2000^{®}, etc., which are a product of Polycom, Inc. (RMX 2000 is a registered trademark of Polycom, Inc.) In one embodiment, the MCU **120A-C** may be an IP MCU, which is a server working on an IP network. IP MCUs **120A-C** are only some of many different network servers that may implement the teachings of the present disclosure. Therefore, the present disclosure should not be limited to IP MCU embodiments only.

In one embodiment, one or more of the MCU **120A-C** may be an MLTV-MCU **120.** The LB **122** may be further notified, by the one or more MLTV-MCU **120,** of the MLTV-MCUs **120** capabilities, such as translation capabilities, for example. Thus, when an endpoint **130** will require subtitles or translation, the LB **122** may refer the EP **130** to an MCU **120** that is an MLTV-MCU.

Network **110** may represent a single network or a combination of two or more networks such as Integrated Services Digital Network (ISDN), Public Switched Telephone Network (PSTN), Asynchronous Transfer Mode (ATM), the Internet, a circuit switched network, an intranet. The multimedia communication over the network may be based on a communication protocol such as, the International Telecommunications Union (ITU) standards H.320, H.324, H.323, the SIP standard, etc.

An endpoint **130A-N** may comprise a user control device (not shown in picture for clarity) that may act as an interface between a conferee in the EP **130** and an MCU **120A-C.** The user control devices may include a dialing keyboard (the keypad of a telephone, for example) that uses DTMF (Dual Tone Multi Frequency) signals, a dedicated control device that may use other control signals in addition to DTMF signals, and a far end camera control signaling module according to ITU standards H.224 and H.281, for example.

Endpoints **130A-N** may also comprise a microphone (not shown in the drawing for clarity) to allow conferees at the endpoint to speak within the conference or contribute to the sounds and noises heard by other conferees; a camera to allow the endpoints **130A-N** to input live video data to the conference; one or more loudspeakers to enable hearing the conference; and a display to enable the conference to be viewed at the endpoint **130A-N.** Endpoints **130A-N** missing one of the above components may be limited in the ways in which they may participate in the conference.

The described portion of system **100** comprises and describes only the relevant elements. Other sections of a system **100** are not described. It will be appreciated by those skilled in the art that depending upon its configuration and the needs of the system, each system **100** may have other number of endpoints **130,** network **110,** LB **122,** and MCU **120.** However, for purposes of simplicity of understanding, four endpoints **130** and one network **110** with three MCUs **120** are shown.

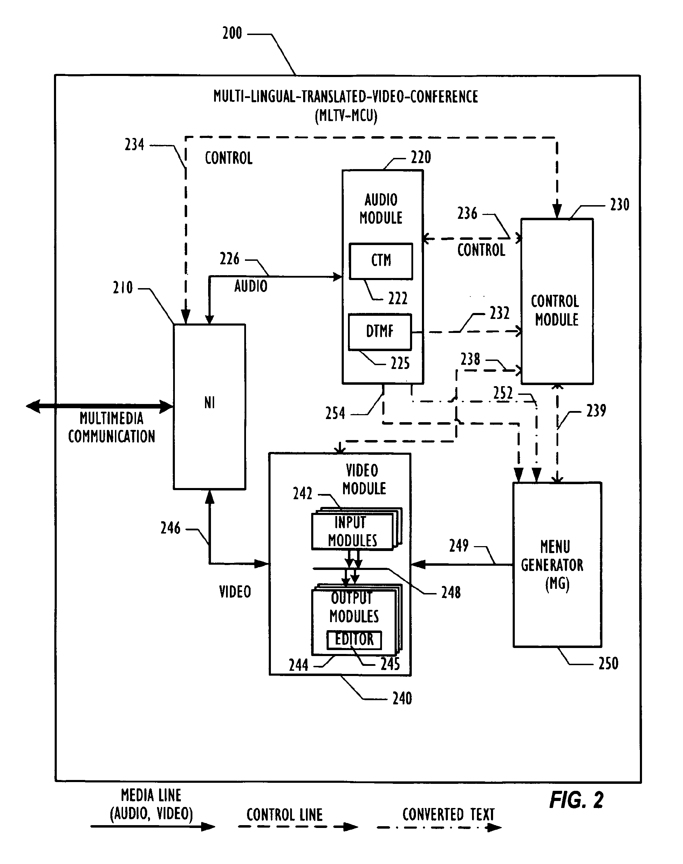

FIG. **2** depicts a block diagram with relevant elements of a portion of one embodiment MLTV-MCU **200.** Alternative embodiments of the MLTV-MCU **200** may have other components and/or may not include all of the components shown in FIG. **2****.**

The MLTV-MCU **200** may comprise a Network Interface (NI) **210.** The NI **210** may act as an interface between the plurality of endpoints **130A-N** and the MLTV-MCU **200** internal modules/modules. In one direction the NI **210** may receive multimedia communication from the plurality of endpoints **130A-N** via the network **110.** The NI **210** may process the received multimedia communication according to communication standards such as H.320, H.323, H.321, H.324, and Session Initiation Protocol (SIP). The NI **210** may deliver compressed audio, compressed video, data, and control streams, processed from the received multimedia communication, to the appropriate module of the MLTV-MCU **200.** Some communication standards require that the process of the NI **210** include demultiplexing the incoming multimedia communication into compressed audio, compressed video, data, and control streams. In some embodiments, the media may be compressed first and then encrypted before sending to the MLTV-MCU **200.**

In the other direction, the NI **210** may transfer multimedia communication from the MLTV-MCU **200** internal modules to one or more endpoints **130A-N** via network **110.** NI **210** may receive separate streams from the various modules of MLTV-MCU **200.** The NI **210** may multiplex and processes the streams into multimedia communication streams according to a communication standard. NI **210** may transfer the multimedia communication to the network **110** which may carry the streams to one or more endpoints **130A-N.**

More information about communication between endpoints and/or MCUs over different networks, and information describing signaling, control, compression, and how to set a video call may be found in the ITU standards H.320, H.321, H.323, H.261, H.263 and H.264, for example.

MLTV-MCU **200** may also comprise an audio module **220.** The Audio module **220** may receive, via NI **210** and through an audio link **226,** compressed audio streams from the plurality of endpoints **130A-N.** The audio module **220** may process the received compressed audio streams, may decompress (decode) and mix relevant audio streams, encode (compress) and transfer the compressed encoded mixed signal via the audio link **226** and the NI **210** toward the endpoints **130A-N.**

In one embodiment, the audio streams that are sent to each of the endpoints **130A-N** may be different, according to the needs of each individual endpoint **130.** For example, the audio streams may be formatted according to a different communications standard for each endpoint. Furthermore, an audio stream sent to an endpoint **130** may not include the voice of a conferee associated with that endpoint, while the conferee's voice may be included in all other mixed audio streams.

In one embodiment, the audio module **220** may include at least one DTMF module **225.** DTMF module **225** may detect and grab DTMF signals from the received audio streams. The DTMF module **225** may convert DTMF signals into DTMF control data. DTMF module **225** may transfer the DTMF control data via a control link **232** to a control module **230.** The DTMF control data may be used to control features of the conference. DTMF control data may be commands sent by a conferee via a click and view function, for example. Other embodiments may use a speech recognition module (not shown) in addition to, or instead of, the DTMF module **225.** In these embodiments, the speech recognition module may use the vocal commands and conferee's responses for controlling parameters of the videoconference.

Further embodiments may use or have an Interactive Voice Recognition (IVR) module that instructs the conferee in addition to or instead of a visual menu. The audio instructions may be an enhancement of the video menu. For example, audio module **220** may generate an audio menu for instructing the conferee regarding how to participate in the conference and/or how to manipulate the parameters of the conference. The IVR module is not shown in FIG. **2****.**

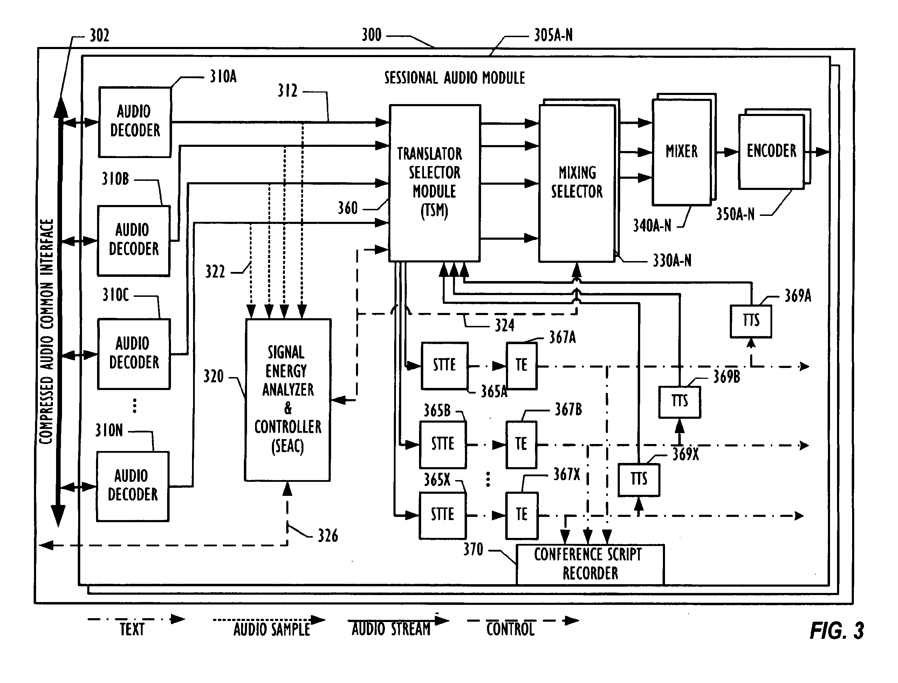

In addition to common operations of a typical MCU, embodiments of the MLTV-MCU **200** may be capable of additional operations as result of having a conference translation module (CTM) **222.** The CTM **222** may determine which of the received audio streams need to be translated. CTM **222** may transfer the identified audio streams that need translation to a Speech-To-Text engine and to a translation engine, for example. The translated text may be transferred toward a menu generator **250.** More information on the operation of CTM **222** and the audio module **220** is disclosed below in conjunction with FIG. **3****.**

In addition to common operations of a typical MCU, MLTV-MCU **200** may be capable of additional operations as result of having the control module **230.** The control module **230** may control the operation of the MLTV-MCU **200** and the operation of its internal modules, such as the audio module **220,** the menu generator **250,** a video module **240,** etc. The control module **230** may include logic modules that may process instructions received from the different internal modules of the MLTV-MCU **200** as well as from external devices such as LB **122** or EP **130.** The status and control information may be sent via control bus **234,** NI **210,** and network **110** toward the external devices. Control module **230** may process instructions received from the DTMF module **225** via the control link **232,** and/or from the CTM **222** via the control link **236.** The control signals may be sent and received via control links **236, 238, 239,** and/or **234.** Control signals may include signaling and control commands received from a conferee via a click and view function or voice commands, commands received from the CTM **222** regarding the subtitles to be presented, and so on.

The control module **230** may control the menu generator **250** via a control link **239.** In one embodiment, the control module **230** may instruct the menu generator **250** which subtitles to present, to which sites, in which language and in which format. The control module **230** may instruct the video module **240** regarding the required layout, for example. Some unique operations of the control module **230** are described in more details below with conjunction with FIGs. **3****,** **5****,** and **6****.**

In one embodiment, the Menu Generator (MG) **250** may be a logic module that generates menus and/or subtitles displayed on an endpoint's displays. The MG **250** may receive commands from the different MLTV-MCU **200** internal modules, such as control module **230** via control link **239,** audio module **220** via control link **254,** etc. In one embodiment, MG **250** may receive text to be displayed as well as graphing instructions from the audio module **220** via text link **252** and from the control module **230** via bus **239.** The received text may be a translation of a speaking conferee whose audio stream is in the audio mix. The MG **250** may generate subtitles and/or menu frames. The subtitles may be visual graphic of the text received from the audio module. More information on menu generator may be found in U.S. Patent No. 7,542,068. In some embodiments, a commercial menu generator, such as Qt Extended, formerly known as Qtopia, may be used as MG **250.**

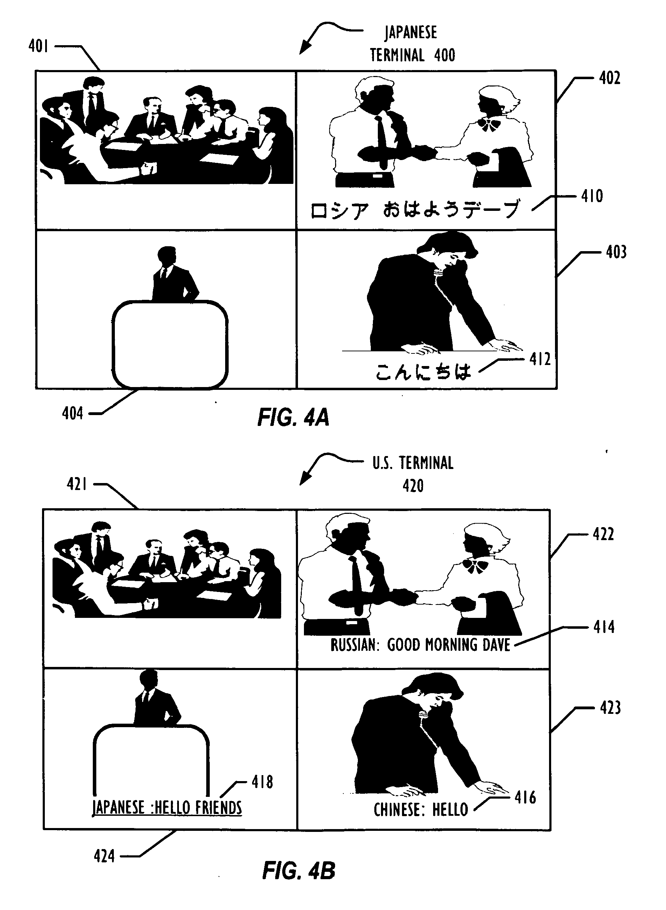

The subtitles may be formatted in one embodiment in a way that one may easily distinguish which subtitle is a translation of which speaking conferee. More information on the subtitles is disclosed in conjunction with FIG. **4** below. The menu frames may comprise relevant options for selection by the conferee.

The subtitles may be graphical images that are in a size and format that the video module **240** is capable of handling. The subtitles may be sent to the video module **240** via a video link **249.** The subtitles may be displayed on displays of the endpoints **130A-N** according to control information received from the control module **230** and/or the MG **250.**

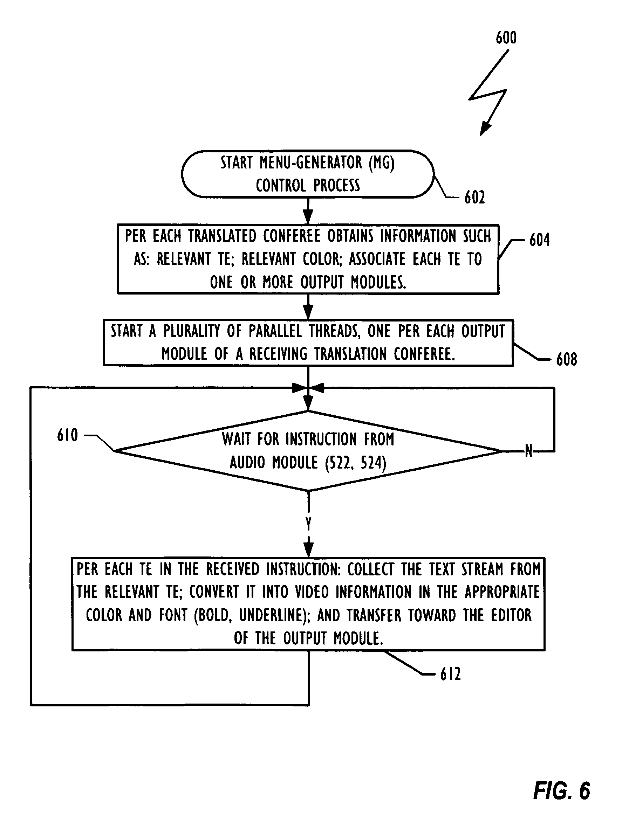

The subtitles may include text, graphic, and transparent information (information related to the location of the subtitle over the video image, to which the conference video image may be seen as background through a partially transparent foreground subtitle). The subtitles may be displayed in addition to, or instead of, part of a common video image of the conference. In another embodiment, the MG **250** may be part of the video module **240.** More details on the operation of the MG **250** are described below in conjunction with FIG **6**.

The video module **240** may be a logic module that receives, modifies, and sends compressed video streams. The video module **240** may include one or more input modules **242** that handle compressed input video streams received from one or more participating endpoint **130A-N;** and one or more output modules **244** that may generate composed compressed output video streams. The compressed output video streams may be composed from several input streams and several subtitles and/or a menu to form a video stream representing the conference for one or more designated endpoints **130A-N** of the plurality of endpoints **130A-N.** The composed compressed output video streams may be sent to the NI **210** via a video link **246.** The NI **210** may transfer the one or more the composed compressed output video streams to the relevant one or more endpoints **130A-N.**

In one embodiment, each video input module may be associated with an endpoint **130.** Each video output module **244** may be associated with one or more endpoints **130** that receive the same layout with the same compression parameters. Each output module **244** may comprise an editor module **245.** Each video output module **244** may produce a composed video image according to a layout that is individualized to a particular endpoint or a group of endpoints **130A-N.** Each video output module **244** may display subtitles individualized to its particular endpoint or a group of endpoints from the plurality of endpoints **130A-N.**

Uncompressed video data delivered from the input modules **242** may be shared by the output modules **244** on a common interface **248,** which may include a Time Division Multiplexing (TDM) interface, a packet-based interface, an Asynchronous Transfer Mode (ATM) interface, and/or shared memory. The data on the common interface **248** may be fully uncompressed or partially uncompressed.

In one embodiment, each of the plurality of output modules **244** may include an editor **245.** The video data from the MG **250** may be grabbed by the appropriate output modules **244** from the common interface **248** according to commands received from the control module **230,** for example. Each of the appropriate input modules may transfer the video data the editor **245.** The editor **245** may build an output video frame from the different video sources, and also may compose a menu and/or subtitles frame into the next frame memory to be encoded. The editor **245** may handle each subtitle as one of the different video sources received via common interface **248.** The editor **245** may add the video data of a subtitle to the layout as one of the rectangles or windows of the video images.

Each rectangle (segment) or window on the screen layout may contain video image received from a different endpoint **130,** such as the video image of the conferee associated with that endpoint. In one embodiment, video data (subtitles, for example) from the MG **250** may be placed above or below the window the presents that video image of the conferee that generate the presented subtitle.

Other editors **245** may treat the video data from the MG **250** as a special video source and display the subtitles as partially transparent and in front of the video image of the relevant conferee so that the video image behind the menu may still be seen. An example operation of a video module **240** is described in U.S. Patent No. 6,300,973, cited above. Other example embodiments of the video module **240** are described in U.S. Patent No. 7,535,485 and in U.S. Patent No. 7,542,068.

In some embodiments, the MG **250** may be a separate module that generates the required subtitles to more than one of the output modules **244.** In other embodiments, the MG **250** may be a module in each of the output modules **244** for generating individualized menus and/or subtitles.

In one embodiment, the subtitles may be individualized in their entirety. For example, the subtitles may be individualized in their setup, look, and appearance according to the requests of the individual endpoints **130A-N.** Alternatively, the appearance of the subtitles may be essentially uniform, although individualized in terms of when the subtitles appear, etc.

The presentation of visual control to the endpoints **130A-N** in one embodiment may be an option that may be selected by a moderator (not shown in the drawings) of a conference while the moderator reserves and defines the profile of the conference. The moderator may be associated with one of the endpoints **130A-N,** and may use a user control device (not shown in the drawings) to make the selections and define the profile of the conference. The moderator may determine whether the conferees will have the ability to control the settings (parameters) of the conference (using their respective user control devices) during the conference. In one embodiment, when allowing the conferees to have the ability to control the settings of the conference, the moderator selects a corresponding option "ON" in the conference profile.

The control links **234, 236, 232, 238,** and **239;** the video links **246** and **249;** the audio link **226,** may be links specially designed for, and dedicated to, carrying control signals, video signals, audio signals, and multimedia signals, respectively. The links may include a Time Division Multiplexing (TDM) interface, a packet-based interface, an Asynchronous Transfer Mode (ATM) interface, and/or shared memory. Alternatively, they may be constructed from generic cables for carrying signals. In another embodiment, the links may carry optical or may be paths of radio waves, or a combination thereof, for example.

FIG. **3** depicts a block diagram with relevant elements of an example portion of an audio module **300** according to one embodiment. Alternative embodiments of the audio module **300** may have other components and/or may not include all of the components shown in FIG. **3****.** Audio module **300** may comprise a plurality of session audio modules **305A-N,** one session audio module **305A-N** per each session that the audio module **300** handles. Each session audio module **305A-N** may receive a plurality of audio streams from one or more endpoints **130A-N,** via the NI **210** through a compressed audio common interface **302.** Each received audio stream may be decompressed, decoded by an audio decoder (AD) **310A-N.**

The AD **310** in one embodiment may detect non-voice signals to distinguish between voice and non-voice audio signals. For example audio streams which are detected as DTMF signals may be transferred to DTMF module **225** and may be converted into digital data. The digital data is transferred to the control module **230.** The digital data may be commands sent from the endpoints **130** to the MLTV-MCU **120A-C,** for example.

Each audio stream may be decompressed and/or decoded by the AD **310A-N** module. Decoding may be done according to the compression standard used in the received compressed audio stream. The compression standards may include ITU standards G.719, G.722, etc. The AD **310A-N** module in one embodiment may comprise common speech filters, which may filter the voice from different kind of noises. The AD **310A-N** speech filters improve the audio quality. The AD **310A-N** may output the filtered decompressed and/or decoded audio data via one or more audio links **312.**

The decoded audio data may be sampled in one embodiment by a signal energy analyzer and controller (SEAC) **320** via links **322.** The SEAC **320** may identify a pre-defined number of audio streams (between 3 to 5 streams, for example) having the highest signal energy. Responsive to the detected signal energy, the SEAC **320** may send one or more control command to a translator-selector module (TSM) **360** and to one or more mixing selectors **330A-N,** via a control link **324.**

The control command to a mixing selector **330** may indicate which audio streams to select to be mixed, for example. In an alternate embodiment the commands regarding which audio streams to mix may be received from the control module **230,** via control link **326.** In an alternate embodiment, the decision may be a combination of control commands from the SEAC **320** and the control module **230.** The SEAC **320** may sample the audio links **312** every pre-defined period of time and or every predefined number of frames, for example.

The TSM **360** may receive the decoded audio streams from the AD **310A-N** via audio links **312.** In addition, the TSM **360** may receive commands from the SEAC **320** indicating which audio streams need to be translated. Responsive to the commands, the TSM **360** may transfer the chosen decoded audio streams to one or more STTE **365A-X.** In an alternate embodiment, the TSM **360** may copy each one of the audio that are needed to be translated and transfer the copy of the audio stream toward a STTE **365A-X** and transfer the original stream toward the mixing selector **330.**

In one embodiment, the STTE **365A-X** may receive the audio streams and convert the audio streams into a stream of text. The STTE **365A-X** may be a commercial component such as the Microsoft Speech SDK, available from Microsoft Corporation, the IBM embedded ViaVoice, available from International Business Machines Corporation, and iListen from MacSpeech, Inc. In one embodiment, the STTE **365** may be a web service such as the Google Translate or Yahoo! Babel fish websites. In yet another embodiment, the STTE may be a combination of the above. Each STTE **365** may be used for one or more languages. In some embodiments in which STTE **365A-X** is located in a remote site, the selected audio stream that has been selected for translation may be compressed before being sent to STTE **365A-X.**

In one embodiment in which each STTE **365A-X** is used for a few languages, the TSM **360** may determine which audio stream to transfer to which STTE **365A-X** according to the language of the audio stream. The TSM **360** may send command information to the STTE **365A-X** together with the audio streams. The command information may include the language of the audio stream and the languages to which the stream should be translated. In another embodiment, the SEAC **320** may instruct directly each STTE **365A-C** on the destination language for the audio stream. In one embodiment, the STTE **365A-X** may be capable of identifying the language of the audio stream and adapt itself to translate the received audio to the needed language. The needed language may be defined in one embodiment by SEAC **320.** Such embodiments may use commercial products that are capable of identifying the language, such as the one that is described in the article "Automatic Language Recognition Using Acoustic Features," published in the Proceedings of the 1991 International Conference on Acoustics, Speech, and Signal Processing.

Other embodiments may use other methods for determining the language of the audio stream and the language to which the stream should be translated. One technique may be by identifying the endpoint (site) that is the source of the audio stream, and the endpoint to which the audio stream should be sent. This information may be received from the NI **210** (FIG. **2**) and/or the control module **230** and may be included in the information sent to the SEAC **320.**

Another embodiment may use a training phase in which the MLTV-MCU **200** may perform a voice-calibration phase, by requesting a conferee to say few pre-defined words in addition to the "state your name" request that which is a common procedure in a continuous presence (CP) conference.

The voice-calibration phase may be done at the beginning of a videoconferencing session or when a conferee joins the session. The voice-calibration phase may also be started by a conferee, for example. During the voice-calibration phase the TSM **360** may learn which conferee's voice needs to be translated. This may be done in one embodiment by requiring the conferee to say a predefined number of words (such as, "good morning," "yes," "no," etc.) at the beginning of the voice-calibration phase, for example. The TSM **360** may then compare the audio string of the words to a plurality of entries in a look-up table. The look-up table may comprise strings of the pre-defined words in different languages. When a match between the received audio string and an entry in the look-up table is received, the TSM **360** may determine the language of a received audio stream. The TSM **360** in one embodiment may have access to a database where it may store information for future use.

In one embodiment, the TSM **360** may receive information on the languages from one or more endpoints by using the click and view function. A conferee may enter information on the conferee's language and/or the languages into which the conference wants to translate his words, or the endpoints he wants to be translated to the conferee's language, the languages into which the conferee wants translation, etc. In other embodiments, a receiving conferee may define the languages and/or the endpoints from which the conferee wants to get the subtitles. A conferee may enter the above information using the click and view function, at any phase of the conference, in one embodiment. The information may be transferred using DTMF signal, for example. In yet another embodiment, the identification may be a combination of different methods.

In further embodiment, the TSM **360** may identify a language by access to a module which may identify a language spoken and inform the TSM **360** about the language. The module may be internal or external module. The module may be a commercial one, such as iListen or ViaVoice, for example. A TSM **360** may perform combination of the above described techniques or techniques that are not mentioned.

After the STTE **365A-X** has converted the audio streams into a text stream, the STTE **365** may arrange the text such that it will have periods and commas in appropriate places, in order to assist a TE **367A-X** to translate the text more accurately. The STTE **365** may then forward the phrases of the converted text into one or more TE **367A-X.** The TE **367A-X** may employ a commercial component such as Systran, available from Systran Software, Inc., Babylon, available from Babylon, Ltd., and iListen, available from MacSpeech, Inc. In other embodiments, the TE **367** may access a web service such as the Google Translate, or Yahoo! Babel fish websites. In yet another embodiment, it may be a combination of the above. Each TE **367** may serve a different language, or a plurality of languages.

The decision to which language to translate each text may be done by identifying on which endpoint (site) the stream of text will be displayed as subtitles or by receiving information on the languages required to be translated to a conferee in an endpoint **130.** The conferee may use the click and view function to identify the destination language. The conferee may enter information on the conferee's language, and/or the endpoints to be translated, the languages that should be translated, etc. The conferee in one embodiment may enter the above information using the click and view function, at any phase of the conference. The information may be transferred in a DTMF signal in one embodiment. In yet another embodiment the identification may be a combination of different techniques, including techniques not described herein.

The TE **367** may output the translated text to the menu generator **250** and/or to text to speech modules (TTSs) **369A-X,** and/or to a conference script recorder **370.** The menu generator **230** may receive the translated text and convert the text into video frames. The menu generator **250** may have a look-up table that may match between a text letter and its graphical video (subtitles), for example. The menu generator **250** may receive commands from the control module **230** and/or the audio module **300.** Commands may include in one embodiment which subtitles to display to which endpoint to display which subtitles, in which format to display each subtitle (color, size, etc), etc.

The menu generator **250** may perform the commands received, modify the subtitles, and transfer them to the appropriate video output module **244.** More information on the menu generator **250** and is disclosed in conjunction with FIG. **2** above and with FIG. **6** below.

In one embodiment, the TE **367A-X** may output the translated text to a conference script recorder **370.** The conference script recorder **370** may be used as a record of the conference discussion. The content stored by the conference script recorder **370** may be sent to all or some of the conferees, each in the language of the conferee. In the conference script there may be an indication which text was said by the main speaker, which text was heard (mixed in the conference call), which text was not heard by all conferees, etc. In one embodiment, indications may include indicating the name of a person's whose audio was converted to the text at the beginning of the line, using a bold font for the main speaker's text, using a different letter size responsive to the audio signal energy measured.

In one embodiment, the TE **367A-X** may output the translated text to a TTS **369A-X.** The TTS **369A-X** may convert the received translated text into audio (in the same language as the text). The TTS **369A-X** may then transfer the converted audio to the TSM **360.** The TSM **360** may receive commands in one embodiment regarding which audio from which TTS **369A-X** to transfer to which mixing selector **330A-N.** The TSM **360** may receive the commands from SEAC **320.** The TTS **369A-X** may be a commercial component such as Microsoft SAPI, available from Microsoft Corporation, or NATURAL VOICES^{®}, available from AT&T Corporation ("NATURAL VOICES" is a registered trademark of AT&T Intellectual Property II, L.P.), for example.

In some embodiments, TSM **360** may include buffers for delaying the audio data of the streams that do not need translation, in order to synchronize the mixed audio with the subtitles. Those buffers may also be used for synchronize the audio and the video.

The selected audio streams to be mixed (including the selected audio streams from the TTS **367A-X**) may be output from the TSM **360** to the appropriate one or more mixing selectors **330A-N.** In one embodiment, there may be one mixing selector **330** for each receiving endpoint **130A-N.** Mixing selector **330A-N** may forward the received modified audio streams toward an appropriate mixer **340A-N.** In an alternate embodiment, a single selector may comprise the functionality of the two selectors TSM **360** and mixing selector **330A-N.** The two selectors, TSM **360** and mixing selector **330A-N,** are illustrated for simplifying the teaching of the present description.

In one embodiment, there may be one mixer per each endpoint **130A-N.** Each mixer **340A-N** may mix the selected input audio streams into one mixed audio stream. The mixed audio stream may be sent toward a encoder **350A-N.** The encoder **350A-N** may encode the received mixed audio stream and output the encoded mixed audio stream toward the NI **210.** Encoding may be done according to the required audio compression standard such as G.719, G.722, etc.

FIGs. **4A** and **4B** depict snapshots of a CP video image of a Multilingual Translated Videoconference, according to one embodiment. FIGs. **4A** and **4B** both depict snapshots **400** and **420.** Each snapshot has **4** segments: snapshot **400** has segments **401, 402, 403,** and **404** and snapshot **420** has segments **421, 422, 423,** and **424.** (The translated text in the figures is illustrative and by way of example only, and is not intended to be the best possible translation of from the original language.) FIG. **4A** is displayed in a Japanese endpoint. Segments **402** and **403** are associated with conferees that speak a language other than Japanese (Russian and English, respectively, in this example), therefore subtitles with translation to Japanese have been added **410,** and **412.** In this embodiment, the subtitles are at the bottom of each translated segment. In an alternate embodiment, all the subtitles may be displayed in one area with different colors, etc. Segment **401** is associated with an endpoint **130** that is silent (its audio signal energy was low than the others) therefore its audio is not heard (mixed) and no subtitles are shown. Segment **404** is a segment of another endpoint whose speaker speaks Japanese therefore his audio is not translated since it is being viewed in a Japanese terminal (endpoint) **130.**

FIG. **4B** is a snapshot displayed in a U.S. endpoint (terminal), for example. Segments **422, 423,** and **424** are audio and video from endpoints that speak a language other than English, therefore subtitles with translation **414, 416,** and **418** have been added in segments **422, 423,** and **424.** The audio signal energy of the conferee that is associated with Segment **421** is lower than the others, therefore, its audio is not heard and no subtitles are shown. In this embodiment, each subtitle begins with an indication of the name of the language from which the subtitle has been translated. The subtitle **418** below the main speaker (a Japanese conferee) (the one with the highest audio signal energy for a certain percentage of a period of time, for example) is indicated by underlining the subtitle.

The subtitles may include text, graphic, and transparent information (information related to the extent to which the conference video image may be seen as background through a partially transparent foreground image).

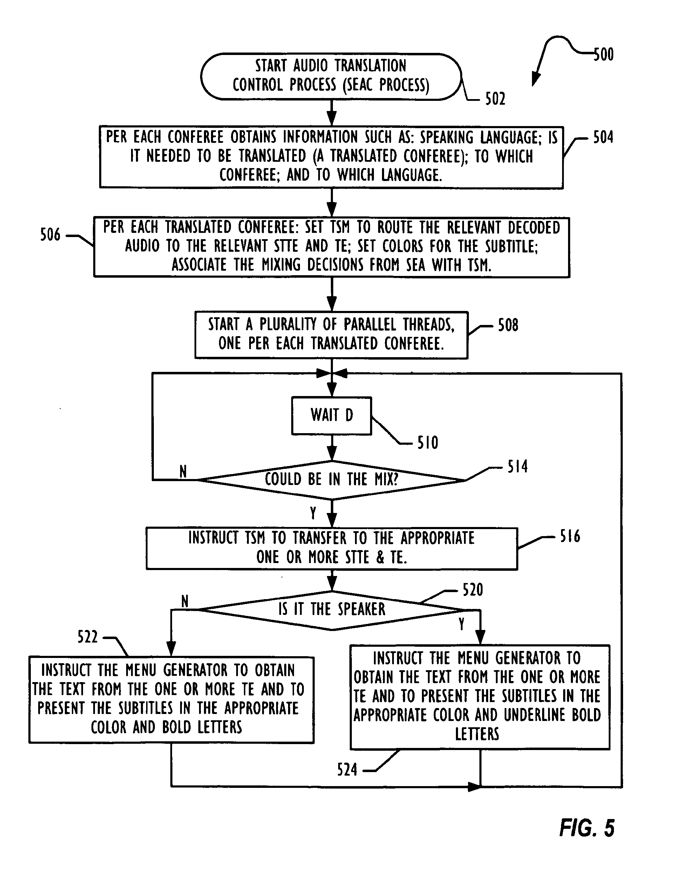

FIG. **5** is a flowchart illustrating relevant steps of an audio translation controlling technique **500** according to one embodiment. In one embodiment, the technique **500** may be implemented by the SEAC **320.** Technique **500** does not include a common process for determining which audio streams are to be mixed or to be defines as a main speaker. Technique **500** is used only for handling the translation process. Upon initiating the conference, technique **500** may be initiated in block **502.** At block **504,** technique **500** may obtain information on the languages used by the different conferees (endpoints) that participate in the session. Language information may include the language used by the conferee and the languages the conferee requires to translate. Different techniques may be used to determine the language information, including techniques not described above.

Next, technique **500** may inform in block **506** the TSM **360** on the obtained language information. The TSM **360** may also be informed about different parameters, which may include information on subtitles color setting for each endpoint, audio-mixing information for each endpoint, and information on audio routing to the appropriate one or more STTE **365A-X** and TE **367A-X.**

Then a plurality of parallel threads may be initiated in block **508,** one per each audio stream that needs to be translated (one per each translated conferee). FIG. **5** illustrates only one thread of the plurality of parallel threads initiated in block **508.** Each thread includes blocks **510** to **522** or **524.** At block **510,** a loop is initiated for each decision cycle. The loop may start in block **510** by waiting for a waiting period D. In one embodiment, D may be in the range of few tens of milliseconds to few hundreds of milliseconds. At the end of the waiting period D, technique **500** may verify in block **514** whether the audio stream of the relevant translated conferee could be in the audio mix. The decision whether the audio stream could be in the mix or not may be dependent on its audio energy compare to the audio energy of the other audio streams, for example. If in block **514** the relevant audio stream could not be in the mix, then technique **500** returns to block **510** and waits. If in block **514** the relevant audio stream could be in the mix, then technique **500** proceeds to block **516.**

At block **516** TSM may be instructed to transfer the relevant audio stream to the appropriate STTE **365A-X** and TE **367A-X.** The appropriate STTE **365A-X** and TE **367A-X** may be based on the speaking language of the relevant translated conferee and the language to which it is to be translated, respectively. Later a decision needs to be made in block **520** whether the relevant translated conferee is the main speaker. If in block **520** the decision is yes, then the menu generator **250** may be instructed **524** to obtain the text from the one or more TEs **367A-X** that were associated with the relevant translated conferee to present in block **524** the text as subtitles in the main speaker format, which may include different color, font, size of letters, underline, etc. Next, technique **500** may return to block **510.** If in block **520** the relevant translated conferee is not the main speaker, then technique **500** may proceed to block **522.** At block **522** the menu generator **250** may be instructed in block **522** to obtain the text from the relevant one or more TEs **367A-X** and present in block **522** the text as subtitles in a regular format, which may include color, font, size of letters, etc. Next, technique **500** may return to block **510.**

FIG. **6** is a flowchart illustrating relevant actions of a menu-generator controlling technique **600** by MG **250** according to one embodiment. Technique **600** may be initiated in block **602** upon initiating the conference. Technique **600** may obtain in block **604** information about each conferee (endpoint), including which TE **367A-X** to associate to the endpoint **130** requirements for the subtitles presentation, and information associating TE **367A-X** to output modules **244.**

A plurality of threads may be started in block **608,** one thread per each output module **244** of a receiving endpoint **130** that requires translation. FIG. 6 illustrates only one thread of the plurality of parallel threads initiated in block **608.** Next, technique **600** may wait in block **610** for instruction. In one embodiment, the instructions may be given by technique **500** in blocks **522** or **524.** If an instruction is received in block **610,** then technique **600** may proceed to block **612.** For each TE **367A-X** in the received instruction, the text stream from the relevant TE**367A-X** may be collected in block **612.** The text stream may be converted in block **612** into video information in the appropriate setting (color, font bold, underline, etc). The video information may be transferred in block **612** toward editor **245** of the appropriate output module. Next, technique **600** may return to block **610.**

In this application the words "module," "device," "component," and "module" are used interchangeably. Anything designated as a module or module may be a stand-alone module or a specialized module. A module or a module may be modular or have modular aspects allowing it to be easily removed and replaced with another similar module or module. Each module or module may be any one of, or any combination of, software, hardware, and/or firmware. Software of a logical module may be embodied on a computer readable medium such as a read/write hard disc, CDROM, Flash memory, ROM, etc. In order to execute a certain task a software program may be loaded to an appropriate processor as needed.

In the description and claims of the present disclosure, "comprise," "include," "have," and conjugates thereof are used to indicate that the object or objects of the verb are not necessarily a complete listing of members, components, elements, or parts of the subject or subjects of the verb.

It will be appreciated that the above-described apparatus, systems and methods may be varied in many ways, including, changing the order of steps, and the exact implementation used. The described embodiments include different features, not all of which are required in all embodiments of the present disclosure. Moreover, some embodiments of the present disclosure use only some of the features or possible combinations of the features. Different combinations of features noted in the described embodiments will occur to a person skilled in the art. Furthermore, some embodiments of the present disclosure may be implemented by combination of features and elements that have been described in association to different embodiments along the discloser. The scope of the invention is limited only by the following claims and equivalents thereof.

While certain embodiments have been described in details and shown in the accompanying drawings, it is to be understood that such embodiments are merely illustrative of and not devised without departing from the basic scope thereof, which is determined by the claims that follow.

## Claims

1. A real-time audio translator for a videoconferencing multipoint control unit, comprising:
a controller, adapted to examine a plurality of audio streams and select a subset of the plurality of audio streams for translation;
a plurality of translator resources, adapted to translate speech contained in the subset of the plurality of audio streams; and
a translator resource selector, coupled to the controller, adapted to pass the subset of the plurality of audio streams selected by the controller to the plurality of translator resources for translation.

2. The real-time audio translator of claim 1, wherein the plurality of translator resources comprises:
a plurality of speech to text engines (STTEs), each adapted to convert speech in one or more of the subset of the plurality of audio streams to text in one or more languages; and
a plurality of translation engines (TEs), coupled to the plurality of STTEs, each adapted to translate text from one or more languages into one or more other languages.

3. The real-time audio translator of claim 2, wherein the plurality of translator resources further comprises:
a plurality of text to speech engines (TTSs), coupled to the plurality of TEs, each adapted to convert text in one or more languages into a translated audio stream.

4. The real-time audio translator of claim 3, further comprising:
a mixing selector, coupled to the translator resource selector, adapted to select audio streams responsive to a command, for mixing into an output audio stream,
wherein the mixing selector is adapted to select from the subset of the plurality of audio streams and the translated audio streams of the plurality of TTSs.

5. The real-time audio translator of claim 1,
wherein the subset of the plurality of audio streams is selected by the controller responsive to audio energy levels of the subset of the plurality of audio streams.

6. The real-time audio translator of claim 1, wherein the translator resource selector is further adapted to transfer the subset of the plurality of audio streams to the plurality of translator resources.

7. The real-time audio translator of claim 1, further comprising:
a mixing selector, coupled to the translator resource selector, adapted to select audio streams responsive to a command, for mixing into an output audio stream.

8. The real-time audio translator of claim 1, further comprising:
a conference script recorder, coupled to the plurality of translator resources, and adapted to record text converted from speech by the plurality of translator resources.

9. A multipoint control unit (MCU) adapted to receive a plurality of input audio streams and a plurality of input video streams from a plurality of conferees and to send a plurality of output audio streams and a plurality of output video streams to the plurality of conferees, comprising:
a network interface, adapted to receive the plurality of input audio streams and the plurality of input video streams and to send the plurality of output audio streams and the plurality of output video streams; and
an audio module, coupled to the network interface, comprising:
a real-time audio translator according to any of claims 1 to 8.

10. The MCU of claim 9, further comprising:
a menu generator module, coupled to the audio module and adapted to generate subtitles corresponding to the speech translated by the real-time translator; and
a video module, adapted to combine an input video stream of the plurality of input video streams and the subtitles generated by the menu generator module, producing an output video stream of the plurality of output video streams.

11. A method for real-time translation of audio streams for a plurality of conferees in a videoconference, comprising:
receiving a plurality of audio streams from the plurality of conferees;
identifying a first audio stream received from a first conferee of the plurality of conferees to be translated for a second conferee of the plurality of conferees;
routing the first audio stream to a translation resource;
generating a translation of the first audio stream; and
sending the translation toward the second conferee.

12. The method of claim 11, wherein the act of identifying a first audio stream received from a first conferee of the plurality of conferees to be translated for a second conferee of the plurality of conferees comprises:
identifying a first language spoken by the first conferee;
identifying a second language desired by the second conferee; and
determining whether the first audio stream contains speech in the first language to be translated.

13. The method of claim 12, wherein the act of identifying a first language spoken by the first conferee comprises:
requesting the first conferee to speak a predetermined plurality of words; and
recognizing the first language automatically responsive to the first conferee's speaking of the predetermined plurality of words.

14. The method of claim 11, wherein the act of routing the first audio stream to a translation resource comprises:
routing the first audio stream to a speech to text engine.

15. The method of claim 11, wherein the act of generating a translation of the first audio stream comprises:
converting speech in a first language contained in the first audio stream to a first text stream; and
translating the first text stream into a second text stream in a second language.

16. The method of claim 15,
wherein the act of generating a translation of the first audio stream further comprises:
converting the second text stream into a second audio stream, and wherein the act of sending the translation to the second conferee comprises:
mixing the second audio stream with a subset of the plurality of audio streams to produce a mixed audio stream; and
sending the mixed audio stream toward the second conferee.

17. The method of claim 11, wherein the act of generating a translation of the first audio stream comprises:
recording the translation of the first audio stream by a conference script recorder.

18. The method of claim 11,
wherein the act of generating a translation of the first audio stream comprises:
converting speech in a first language contained in the audio stream to a first text stream;
translating the first text stream into a second text stream in a second language; and
converting the second text stream in the second language into subtitles, and
wherein the act of sending the translation to the second conferee comprises:
inserting the subtitles into a video stream; and
sending the video stream and the subtitles to the second conferee.

19. The method of claim 11, wherein the act of generating a translation of the first audio stream comprises:
identifying the first conferee as a main conferee;
converting speech in a first language contained in the first audio stream to a first text stream;
translating the first text stream into a second text stream in a second language;
converting the second text stream in the second language into subtitles; and
associating an indicator indicating the first conferee is the main conferee with the subtitles.
